# EUROPEAN PATENT SPECIFICATION

(11) **EP 1 532 854 B1**
(45) Date of publication and mention of the grant of the patent: **02.11.2006**
(21) Application number: 04078094.2
(22) Date of filing: 10.11.2004
(51) Int. Cl.: A01B 59/00

(54) **Improved hook for the lifting devices of agricultural machines**
Kupplungshaken fur den Anhängebock einer landwirtschaftlichen Maschine
Crochet d'accouplement pour dispositif de suspension de machine agricole

(30) Priority: 21.11.2003 IT RE20030029 U
(43) Date of publication of application: 25.05.2005
(73) Proprietor: A.M.A. S.p.A., 42018 San Martino in Rio RE (IT)
(72) Inventor: Vignoli, Stefano, 42018 San Martino in Rio (Reggio Emilia) (IT); Lirani, Nicola, 42018 San Martino in Rio (Reggio Emilia) (IT)
(74) Representative: Corradini, Corrado

(56) References cited:
- DE-A1- 19 653 201
- DE-U1- 8 713 018
- US-A- 3 977 698
- US-A- 4 366 967
- US-A- 5 497 835

## Description

The present invention relates to an automatic hook to be fixed to the free end of one of the arms of a lifting device of an agricultural machine, such as a tractor (see. e.g. US-A-3977698).

Hooks for automatically receiving and locking the ball connector of an agricultural implement have long been used on such lifting devices.

Hooks are known for example comprising a monolithic hook-shaped body provided with a coupling seat for a ball connector.

Said seat communicates with a rear housing containing a catch to partially obstruct said coupling seat by the effect of elastic positioning means, and externally accessible release means by which said catch can be deactivated against the force of said elastic means.

When the ball connector is inserted into the coupling seat, the ball connector causes the catch to move rearwards, to then advance by the effect of the elastic means when the ball connector has been received in said seat.

When in this configuration, if the ball connector is forced in the direction for its extraction, this is prevented by the catch, which remains in the locking position unless the release means are operated.

However it can happen, as in fact has been the case, that that part of the catch facing the ball connector can be accidentally struck such as to force the catch rearwards and disengage it from the ball connector, with all the problems that this can involve.

The main object of the present invention is to overcome the aforesaid problem within the context of a simple and rational construction which is reliable, robust, of low cost and safe.

In particular, with regard to the safety aspect, the invention provides an automatic anti-release hook in the sense that it is able to prevent accidental disengagement of the ball connector when forces are present which tend to remove it from the ball connector coupling seat.

This object is attained by the characteristic elements indicated in the main claim.

Preferred embodiments of said elements are defined in the secondary claims.

The constructional characteristics and merits of the invention, and its method of operation, will be apparent from the ensuing detailed description given with reference to the figures of the accompanying drawings, in which:
Figure 1 is a partly sectional side view showing the hook during the insertion of the ball connector;
Figure 2 shows the same hook at the end of insertion;
Figure 3 is a view similar to Figure 2, showing a further operative configuration of the hook;
Figure 4 shows the hook in its release configuration;
Figure 5 is a partial view in the direction V of Figure 4.

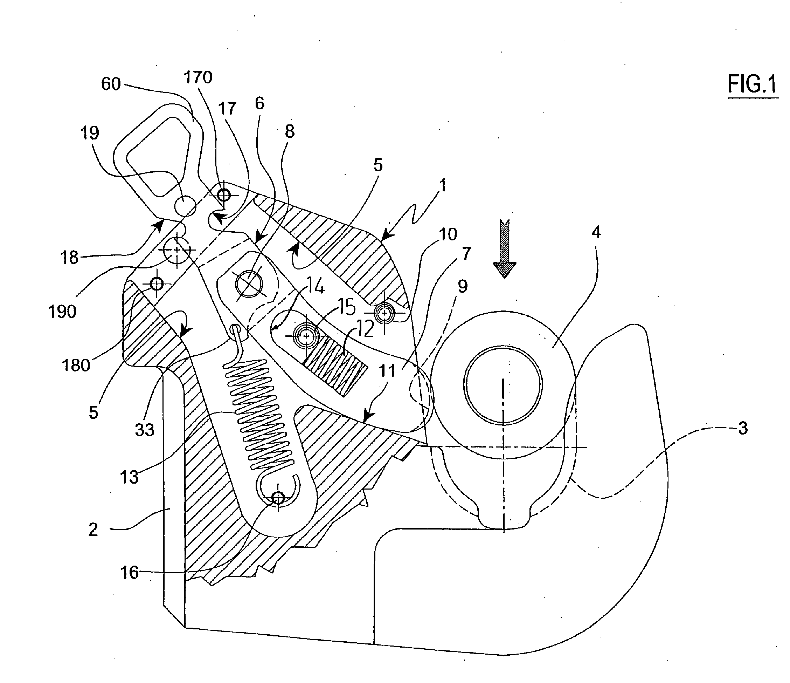

Said figures, and in particular Figures 1 to 4, shown a robust metal body 1 having the characteristic shape of a hook.

Said body 1 presents at its rear a tapered portion 2 intended to be welded to a lifting device of an agricultural machine, and at its front a coupling seat 3 shaped as a spherical surface portion.

The seat 3 is provided to receive a usual ball connector 4 of a likewise usual agricultural implement.

As can be seen, the body 1 is traversed by a profiled through aperture 5 the rear mouth of which opens above the tapered portion 2, whereas its front mouth faces the upper region of the seat 3.

The aperture 5 houses, in the stated order, a rear profiled lever or handle 6, and a front catch 7 which is pivoted to the handle 6 by the pin indicated by 8.

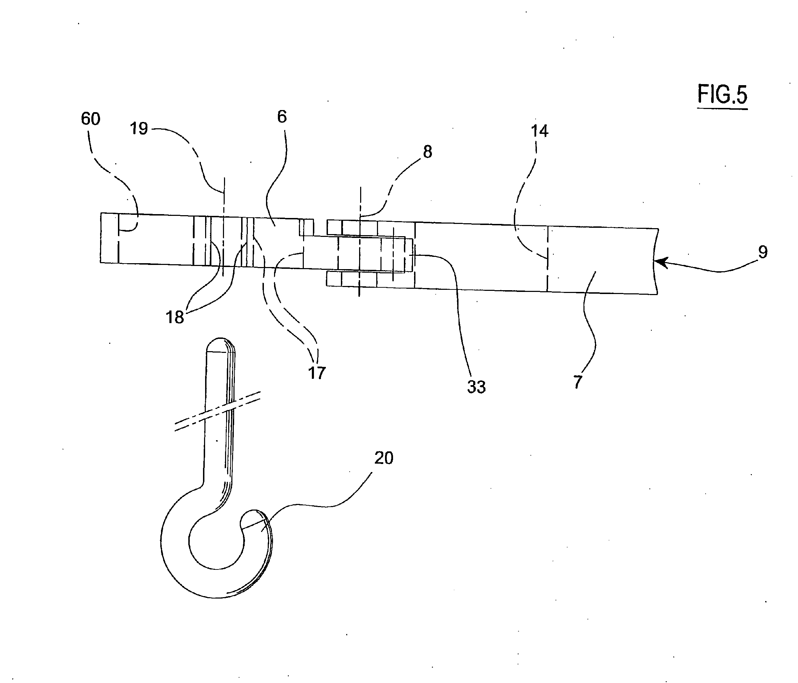

The handle 6 and catch 7 are flat as can be seen from Figure 5.

The catch 7 has a slightly curved lateral profile with its concavity facing upwards (see Figures 1-4), and in its tip presents a forward facing groove 9 of cross-section matching the spherical shape of the ball connector 4 (Figure 5).

During the forward and rearward movements of the catch 7, its upper and lower arcuate edges engage, along a substantially linear contact region, with a transverse pin 10 which passes through the aperture 5, and with an inclined surface 11 of the aperture 5 itself.

The catch 7 is constantly forced towards the coupling seat 3 by a pair of elastic members 12 and 13, of which the first 12 acts on the catch 7 and the second 13 on the handle 6.

The first elastic member 12 consists of a thrust spring which is housed within an elongate window 14 situated along the length of the catch 7, and lies between the front end of said window 14 and a transverse pin 15 passing through the window 14 and aperture 5.

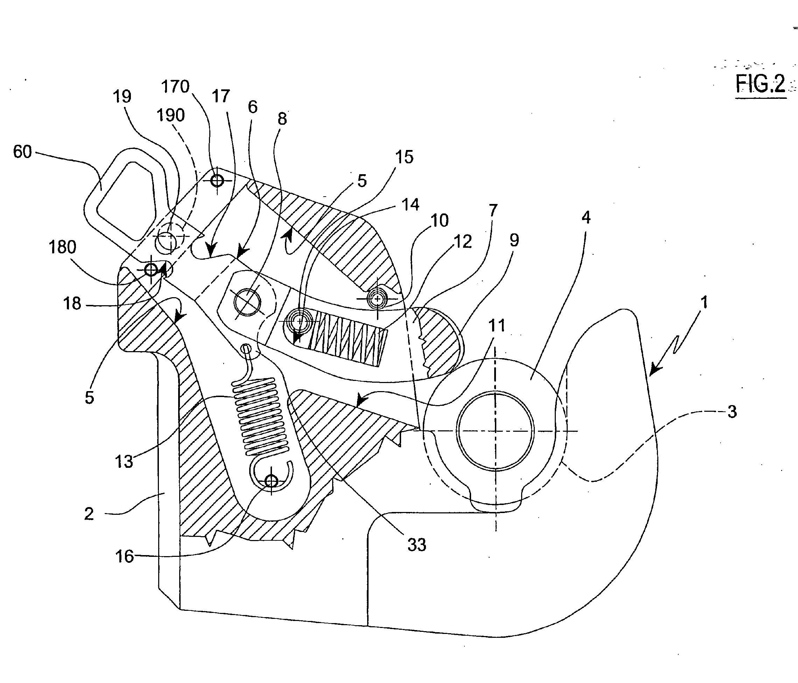

In addition to acting as a counteracting member for the spring 12, the pin 15 also acts as the limit stop for the forward movement of the catch 7 (Figure 2).

The pin 15 has a diameter less than the width of the window 14 to enable the catch 7 to undergo its necessary transverse excursions (Figures 1-4). The second elastic member 13 consists of a tension spring which at one end is coupled to an appendix 33 of the handle 6, and at its other end is coupled to a transverse pin 16 passing through the aperture 5.

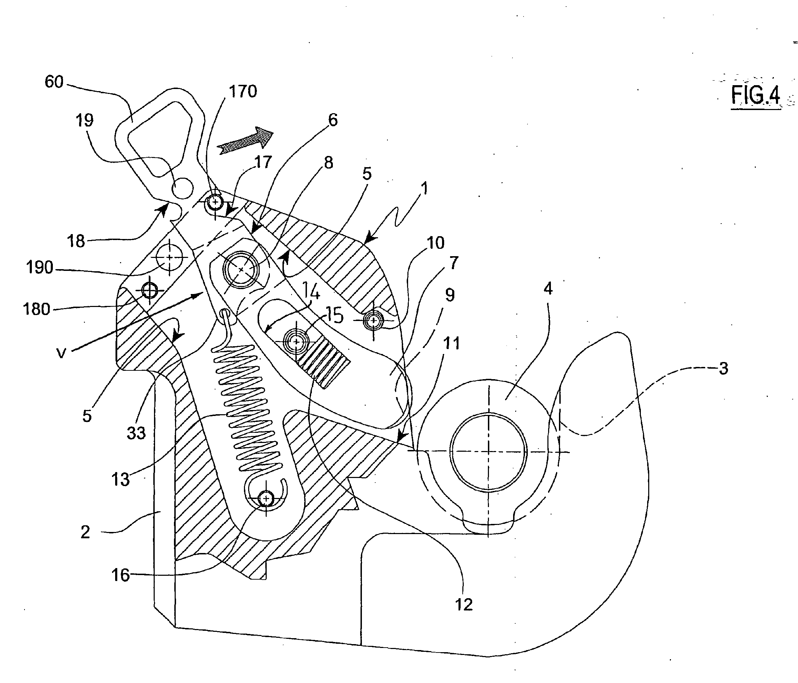

Said appendix 33 is designed to engage (Figures 1 and 4) the fork-shaped inner end of the catch 7 (Figure 5).

The handle 6 emerges from the rear mouth of the aperture 5 where it presents an eyelet 60 to be connected to a suitable pull cable usually terminating at the driving seat of the agricultural machine, such as a tractor.

In proximity to said eyelet 60 there is provided, in the front edge of the handle 6, a first recess 17 acting as a retention pawl, to engage a forward lying transverse pin 170 passing through the aperture 5.

In the rear edge of the handle 6 there is provided a second recess 18 acting as an anti-release seat, arranged to engage a transverse pin 180 passing through the aperture 5.

Said first recess 17 faces the coupling seat 3, while said second recess 18 is positioned in the opposite direction. Finally, in proximity to said recesses 17 and 18 the handle 6 presents a through hole 19 which can be aligned with two coaxial holes 190 provided in the sides of the aperture 5, to provide an engagement seat for a bolt 20 (see Figure 5).

The described hook operates substantially as follows.

Before inserting the ball connector 4, the constituent elements of the hook lie in the configuration of Figure 2, established by the springs 12 and 13, in which the catch 7 rests against the pins 10 and 15, while the handle 6 lies rearwards with the pin 180 in contact with the upper flank of the recess 18. When the ball connector 4 is inserted into the seat 3, as in Figure 1, it lowers the catch 7 and pushes it rearwards against the thrust and traction forces of the springs 12 and 13 respectively, which then return the catch to its previous position when the ball connector 4 has passed beyond it (Figure 2).

In this position the pin 180 lies at the entry to the recess 18, with the catch 7 preventing the ball connector 4 from leaving its seat 3.

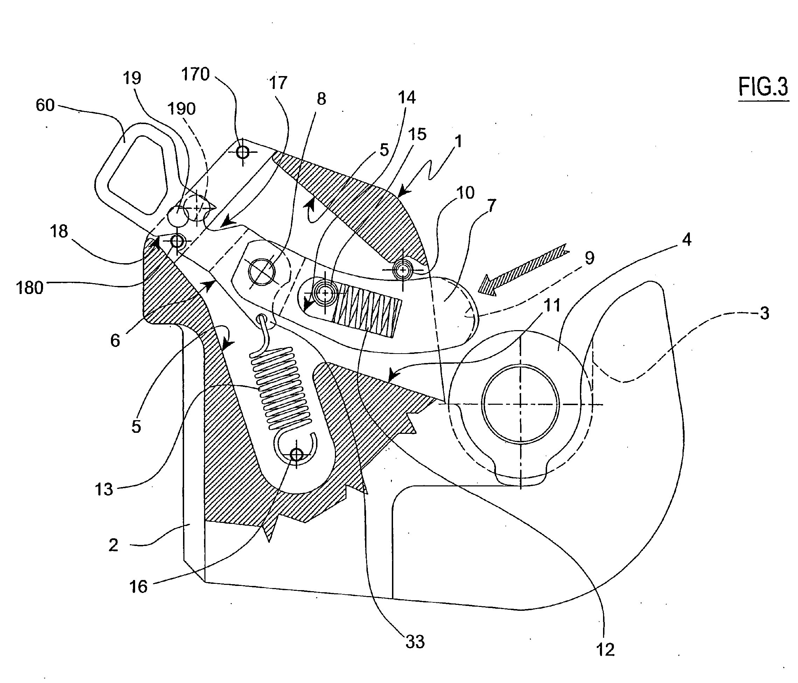

It is prevented from so doing not only when the ball connector 4 is forced upwards, or vice versa the body 1 is forced downwards, but also when an accidental impact, indicated by an arrow in Figure 3, acts on the tip of the catch 7.

In such situations the catch 7 withdraws slightly, but without releasing the ball connector 4, and halts when the pin 180 fully engages in the recess 18.

To release the ball connector 4 the handle 6 has merely to be pulled upwards, so causing the catch 7 to withdraw.

Having done this, to deactivate the catch 7 in order to maintain the hook open, the handle 6 needs merely to be pushed forwards, as indicated by an arrow in Figure 4, to engage the recess 17 with the pin 170.

Subsequent disengagement of the recess 17 from the pin 170 results automatically in reactivation of the catch 7 by the springs 12 and 13. The catch 7 can be locked in the active position by inserting the bolt 20 (Figure 5) into its seats 19, 190.

## Claims

1. A hook for the lifting devices of agricultural machines, comprising a monolithic hook-shaped body (1) provided with a coupling seat (3) for a ball connector (4) at the emergence of a rear through aperture (5) containing a catch (7) arranged to partially obstruct the coupling seat, externally accessible catch release means pivoted to the rear end of the catch, and elastic positioning means for maintaining the catch constantly urged towards the coupling seat, **characterised in that** a safety device is interposed between said body and said release means to prevent the untimely withdrawal of the catch when in the presence of forces acting on its front end the catch having upper and lower arcuate edges respectively engaging, along a substantially linear contact region, with a transverse pin (10) which passes through the aperture (5), and with an inclined surface (11) of the aperture (5) itself, during forward and rearward movements of the catch (7).

2. A hook as claimed in claim 1, **characterised in that** said release means comprise a profiled lever or handle pivoted to that end of the catch distant from the coupling seat and comprising a first recess facing the coupling seat to engage a pin in order to maintain the catch open, and a second recess facing the opposite direction to engage a respective pin in order to prevent accidental opening of the catch.

3. A hook as claimed in claim 1, **characterised in that** said elastic means comprise a first elastic member interposed between the body and the lever, and a second elastic member interposed between the body and the catch.

4. A hook as claimed in claim 3, **characterised in that** said first elastic member is a tension spring and said second elastic member is a thrust spring.

5. A hook as claimed in claim 4, **characterised in that** said thrust spring is housed within a window of the catch, in which it lies between the front end of said window and a rear transverse pin fixed to the body and slackly inserted through the window.

6. A hook as claimed in claim 2, **characterised by** comprising a locking system to rigidly lock the lever and body together.

7. A hook as claimed in claim 6, **characterised in that** said locking system comprises a bolt to be inserted through matching holes provided in the body and lever.

## Patentansprüche

1. Haken für die Hebevorrichtungen von landwirtschaftlichen Maschinen, welcher einen monolithischen, hakenförmigen Körper (1), der mit einem Kupplungssitz (3) für einen Kugelverbinder (4) an dem Austritt einer hinteren Durchgangsbohrung (5) versehen ist, die eine Klinke (7) aufweist, die so angeordnet ist, dass sie den Kupplungssitz teilweise blockiert, eine von außen zugängliche Klinkenfreigabeeinrichtung, die an dem hinteren Ende der Klinke gelenkig angeordnet ist, und eine elastische Positioniereinrichtung aufweist, um die Klinke konstant in Richtung des Kupplungssitzes gedrückt zu halten,
**dadurch gekennzeichnet , dass**
eine Sicherheitsvorrichtung zwischen dem Körper und der Freigabeeinrichtung angeordnet ist, um das frühzeitige Zurückziehen der Klinke zu verhindern, wenn Kräfte auf ihr vorderes Ende einwirken, wobei die Klinke obere und untere, gebogene Ränder aufweist, die entlang eines im wesentlichen linearen Kontaktbereichs jeweils mit einem Querstift (10), welcher durch die Bohrung (5) verläuft, und mit einer geneigten Fläche (11) der Öffnung (5) selbst in Eingriff sind, und zwar während Vorwärts- und Rückwärts-Bewegungen der Klinke (7).

2. Haken nach Anspruch 1,
**dadurch gekennzeichnet , dass**
die Freigabeeinrichtung einen profilierten Hebel oder Handgriff aufweist, welcher an demjenigen Ende der Klinke gelenkig angeordnet ist, das von dem Kupplungssitz entfernt ist, und der eine erste Aussparung, welche dem Kupplungssitz zugerichtet ist, um mit einem Stift in Eingriff zu gehen, um die Klinke offen zu halten, und eine zweite Aussparung aufweist, welche der gegenüberliegenden Richtung zugerichtet ist, um mit einem entsprechenden Stift in Eingriff zu gehen, um ein versehentliches Öffnen der Klinke zu verhindern.

3. Haken nach Anspruch 1,
**dadurch gekennzeichnet , dass**
die elastische Einrichtung ein erstes elastisches Element, welches zwischen dem Körper und dem Hebel angeordnet ist, und ein zweites elastisches Element aufweist, welches zwischen dem Körper und der Klinke angeordnet ist.

4. Haken nach Anspruch 3,
**dadurch gekennzeichnet , dass**
das erste elastische Element eine Zugfeder und das zweite elastische Element eine Druckfeder ist.

5. Haken nach Anspruch 4,
**dadurch gekennzeichnet, dass**
die Druckfeder innerhalb eines Fensters der Klinke untergebracht ist, in welcher sie zwischen dem vorderen Ende des Fensters und einem hinteren Querstift liegt, welcher an dem Körper angebracht ist und lose durch das Fenster eingeführt ist.

6. Haken nach Anspruch 2,
**dadurch gekennzeichnet , dass**
er ein Verriegelungssystem zum starren Verriegeln des Hebels und des Körpers miteinander aufweist.

7. Haken nach Anspruch 6,
**dadurch gekennzeichnet, dass**
das Verriegelungssystem einen Bolzen aufweist, welcher durch zugehörige Bohrungen einführbar ist, welche in dem Körper und dem Hebel vorgesehen sind.

## Revendications

1. Crochet destiné à des dispositifs de levage de machine agricole, comprenant un corps monolithique (1) en forme de crochet ayant un siège (3) d'accouplement d'un raccord à bille (4) à la sortie d'une ouverture (5) débouchant à l'arrière et contenant un cliquet (7) destiné à obstruer partiellement le siège d'accouplement, un dispositif de libération de cliquet accessible depuis l'extérieur et pivotant à l'extrémité arrière du cliquet, et un dispositif élastique de positionnement destiné à maintenir le cliquet constamment repoussé vers le siège d'accouplement, **caractérisé en ce qu'**un dispositif de sécurité est disposé entre le corps et le dispositif de libération pour empêcher l'extraction intempestive du cliquet en présence de forces agissant sur son extrémité avant, le cliquet ayant des bords supérieur et inférieur courbes coopérant respectivement, le long d'une région pratiquement linéaire de contact, avec une broche transversale (10) qui passe dans l'ouverture (5) et avec une surface inclinée (11) de l'ouverture (5) elle-même, pendant les mouvements du cliquet (7) vers l'avant et vers l'arrière.

2. Crochet selon la revendication 1, **caractérisé en ce que** le dispositif de libération comporte une poignée ou un levier profilé qui pivote à l'extrémité du cliquet qui est distante du siège d'accouplement et comprend une première cavité tournée vers le siège d'accouplement et destinée à coopérer avec une broche pour le maintien du cliquet en position d'ouverture, et une seconde cavité tournée en sens opposé et destinée à coopérer avec une broche respective afin d'empêcher une ouverture accidentelle du cliquet.

3. Crochet selon la revendication 1, **caractérisé en ce que** le dispositif élastique comporte un premier organe élastique disposé entre le corps et le levier, et un second organe élastique disposé entre le corps et le cliquet.

4. Crochet selon la revendication 3, **caractérisé en ce que** le premier organe élastique est un ressort de tension et le second organe élastique est un ressort de poussée.

5. Crochet selon la revendication 4, **caractérisé en ce que** le ressort de poussée est logé dans une fenêtre du cliquet dans laquelle il se trouve entre l'extrémité avant de la fenêtre et une broche arrière transversale fixée au corps et insérée avec du jeu dans la fenêtre.

6. Crochet selon la revendication 2, **caractérisé en ce qu'**il comprend un système de blocage destiné à bloquer rigidement le levier et le corps en coopération.

7. Crochet selon la revendication 6, **caractérisé en ce que** le système de blocage comprend un loquet destiné à pénétrer dans des trous complémentaires formés dans le corps et le levier.
